# EUROPÄISCHE PATENTSCHRIFT

(11) **EP 0 504 723 B1**
(45) Veröffentlichungstag und Bekanntmachung des Hinweises auf die Patenterteilung: **25.08.1993**
(21) Anmeldenummer: 92104159.6
(22) Anmeldetag: 11.03.1992
(51) Int. Cl.: B01J 35/06, C01B 21/26

(54) **Verfahren zur Herstellung von gasdurchlässigen Netzen aus Edelmetallen für katalytische Prozesse**
Preparation process of permeable precious metal nets for catalytic processes
Procédé de préparation de tissus de métaux précieux perméable aux gaz pour des procédés catalytique

(30) Priorität: 16.03.1991 DE 4108625; 28.02.1992 DE 4206199
(43) Veröffentlichungstag der Anmeldung: 23.09.1992
(73) Patentinhaber: Degussa Aktiengesellschaft, 60311 Frankfurt (DE)
(72) Erfinder: Blass, Siegfried, Dipl.-Ing., W-8755 Alzenau 2 (DE); Dübler, Horst, Dr. Ing., W-6450 Hanau 9 (DE); Stoll, Thomas, Dipl.-Ing., W-7410 Reutlingen (DE)

(56) Entgegenhaltungen:
- EP-A- 0 259 966
- EP-A- 0 364 153
- DE-A- 2 829 035
- DE-A- 2 855 102
- FR-A- 771 524
- GB-A- 2 062 486

## Beschreibung

Die Erfindung betrifft ein Verfahren zur Herstellung von gasdurchlässigen Geweben zur katalytischen Oxidation Von Ammoniak mit Luft oder zur Rückgewinnung der bei der katalytischen Ammoniakverbrennung sich verflüchtigenden Platinmetalle durch Stricken von Drähten aus Platin- und Palladiumlagerungen auf Strickmaschinen.

Die Verwendung von Edelmetallkatalysatoren in Form von gasdurchlässigen Geweben ist eine bewährte Methode, um bestimmte katalytische Prozesse mit optimalen Ausbeuten zu betreiben. Ein bekanntes Beispiel ist der Einsatz von Platin/Rhodium-Katalysatornetzen bei der Ammoniakverbrennung zur Salpetersäureherstellung.

Die Netzform der Katalysatoren bietet dabei mehrere Vorteile gegenüber sonstigen Katalysatorkonfigurationen. Mit der Netzform lässt sich beispielsweise eine große Oberflächenausbildung bei guter mechanischer Festigkeit erreichen. Über Drahtziehen und Drahtweben hat man bewährte mechanische Fertigungsverfahren zur Verarbeitung der katalytisch wirksamen Metalle und Metallegierungen. Diese Katalysatornetze werden auf Webstühlen in Bahnen gefertigt und entsprechend den Dimensionen der Verbrennungsanlagen in Kreisform zurechtgeschnitten. Dadurch entstehen beträchtliche Edelmetallabfälle, die aufgearbeitet werden müssen.

Netze haben aber den Vorteil, daß sie mit ihren Maschen eine homogene Struktur aus Metalldrähten und freien Durchtrittsöffnungen für die Reaktionsgase bilden.

Inhomogenitäten in Form von z.B. Nähten oder Schweißstellen, die einen gleichmäßigen Gasstrom behindern, sind nicht vorhanden.

Analog gefertigte Netze werden auch bei der Rückgewinnung von Edelmetallen, beispielsweise bei der Ammoniakverbrennung eingesetzt. Mit Hilfe von Netzen aus Palladiumlegierungen wird ein Großteil der Edelmetalle wieder aufgefangen, die sich während des Prozesses von den Platin/Rhodium-Katalysatornetzen verflüchtigen.

Durch ihr Herstellverfahren haben gewebte Netze eine Reihe von Nachteilen. Das betrifft den Zeitaufwand beim Aufrüsten der Webstühle, das Weben in großen Längen und das Ausschneiden der kreisrunden Netze aus rechteckigen Bahnen mit ca. 35 % Verschnitt.

Es entstehen hohe Fertigungskosten durch lange Rüstzeiten und den hohen Verschnittanteil, sowie hohe Materialbindungen von teuren Edelmetallen auf dem Webstuhl, was einen hohen Kapitaleinsatz erforderlich macht.

Die gewebten Netze lassen sich auch durch andere gasdurchlässigen Konfigurationen ersetzen. So sind z.B. gelöcherte Metallfolien und Metallfaservliese (DE-C- 15 94 716).

Metallfilze (DE-C- 28 29 035) oder zusammengelegte schlauchförmige Drahtgeflechte (DE-A- 22 48 811) bekannt.

Diese Konfigurationen konnten sich in der Praxis jedoch nicht durchsetzen, da sie vor allem die Strömungsverhältnisse im Reaktionsraum negativ beeinflussen.

In der EP-B- 0 077 121 werden neuerdings zur Edelmetallrückgewinnung bei der Ammoniakverbrennung auch gestrickte Netze erwähnt. Über deren Form und Herstellung werden jedoch keine Angaben gemacht.

Aus der EP-A- 0 364 153 ist ein Verfahren zur Herstellung von Netzen aus Edelmetallegierungen bekannt, insbesondere für die katalytische Ammoniakverbrennung und die Edelmetallrückgewinnung bei dem Edelmetallegierungsdrähte zusammen mit einem Hilfsfaden aus natürlichen Fasern oder einem Kunststoff auf einer Strickmaschine verstrickt werden. Ein Verstricken von reinen Edelmetallegierungsdrähten ohne Hilfsfaden ist nicht möglich, da die Drähte beim Strickvorgang brechen und reißen, wobei die Zugfestigkeit, der Drahtdurchmesser, die Duktilität und der Oberflächenreibungsfaktor des Materials eine Rolle spielen sollen. Das Mitverstricken eines Hilfsfadens hat den Nachteil, daß dieser vor dem Einsatz der Netze wieder entfernt werden muß, was durch Wegbrennen oder Herauslösen geschehen kann. Beide Verfahren sind zu aufwendig, und können zu Verunreinigungen der Metallegierungen führen, was zu negativen Einwirkungen auf deren katalytische Aktivität oder Rückgewinnungsquote führen kann.

Es war daher Aufgabe der vorliegenden Erfindung, ein Verfahren zur Herstellung von gasdurchlässigen Netzen aus Edelmetallen für katalytische Prozesse. insbesondere zur katalytischen Oxidation von Ammoniak oder zur Rückgewinnung der bei der katalytischen Ammoniakverbrennung sich verflüchtigenden Platinmetalle durch Stricken von Drähten aus Platin-oder Palladiumlegierungen auf Strickmaschinen zu entwickeln, bei dem kein Hilfsfaden mitverstrickt werden muß und trotzdem die für den jeweiligen Prozess erforderlichen Flächengewichte von mehr als 300 g/m² erreichbar sind.

Diese Aufgabe wird erfindungsgemäß dadurch gelöst, daß Drähte aus Platin-Rhodium-Legierungen mit 4 bis 12 Gew. % Rhodium oder Drähte aus Platin-Palladium-Rhodium-Legierungen mit 4 bis 12 Gew.% Palladium und Rhodium oder Drähte aus Palladium-Nickel-Legierungen mit 2 bis 15 Gew. % Nickel oder Drähte aus Palladium-Kupfer-Legierungen mit 2 bis 15 Gew.% Kupfer oder Drähte aus Palladium Nickel-Kupfer-Legierungen mit 2 bis 15 Gew.% Nickel und Kupfer eingesetzt werden, die einen Durchmesser von 50 bis 120 µm aufweisen, eine Zugfestigkeit von 900 bis 1050 N/mm² und eine Dehnungsgrenze von 0,5 bis 3 % besitzen müssen und daß Flachstrickmaschinen verwendet werden, deren Teilung zwischen 3,63 mm und 1,81 mm und deren Maschenlänge zwischen 2 und 6 mm liegt. Unter Teilung versteht man nach DIN 60917 den Abstand der Mitten zweier benachbarter Nadeln desselben Nadelträgers. Die Teilung von 3,63 mm bis 1,81 mm entspricht einer Nadelanzahl pro inch zwischen 7 und 14.

In vielen Fällen ist es vorteilhaft, zwei und mehr Drähte gemeinsam miteinander zu verstricken.

Bei Einhaltung dieser Draht- und Strickmaschinenparameter lassen sich aus Platin-Rhodiumdrähten mit beispielsweise 10 Gew. % Rhodium oder aus Palladium-Nickel-Drähten mit beispielsweise 5 Gew. % Nickel überraschenderweise ohne Verwendung von Hilfsfäden Netze mit einwandfrei ausgebildeten Maschen stricken, die bei der Anwendung im Gasstrom keine Inhomogenitäten hervorrufen.

Drahtbrüche sind nicht erkennbar bzw. treten während des Strickvorgangs nicht auf. Flächengewichte von mehr als 300 g/m² sind leicht erreichbar.

Die Verwendung von Flachstrickmaschinen bringt den weiteren Vorteil, daß die Strickgewebe rund auf Endmaß gefertigt werden können, und zwar genau im für die Anlage benötigten Durchmesser, so daß keinerlei Abfall beim sonst notwendigen Rundschneiden der Gewebe anfällt, der wiederaufgearbeitet werden müsste.

Folgende Beispiele sollen das erfindungsgemäße Verfahren näher erläutern:
1. Zur Herstellung eines runden Katalysatornetzes für die Ammoniakverbrennung mit 2300 mm Durchmesser benutzt man eine Flachstrickmaschine mit einer Teilung von 2,12 mm (12 Nadeln pro inch). Gestrickt wird das Gewebe mit einem Draht aus 90 Platin/10 Rhodium von 76 µm Durchmesser, wobei der Draht doppelt verwendet wird. Er besitzt eine Zugfestigkeit von 930 N/mm² und eine Dehnungsgrenze von 1 %.
   Die Maschenlänge beim Stricken beträgt 2,8 mm. Man erhält ein Netz mit einem Flächengewicht von etwa 600 g/m², daß sich hervorragend beim Einsatz in Ammoniakverbrennungsanlagen bewährt hat.
2. Zur Herstellung von runden Rückgewinnungsnetzen für die Ammoniakverbrennung benutzt man eine zweibettige Flachstrickmaschine mit einer Teilung von 2,54 mm.

Der Draht mit einer Zusammensetzung von 95 Palladium/5 Nickel besitzt einen Durchmesser von 90 µm, eine Zugfestigkeit von 920 N/mm und eine Dehnungsgrenze von 1 % . Die Maschenlänge beim Stricken beträgt 3,9 mm. Man erhält ein Netz von 3700 mm Durchmesser mit einem Flächengewicht von 500 g/m², wenn man den Draht doppelt einsetzt. Die Rückgewinnungsquote an Platinmetallen in Ammoniakverbrennungsanlagen ist mindestens gleich hoch wie bei entsprechenden gewebten Netzen.

## Patentansprüche

1. Verfahren zur Herstellung von gasdurchlässigen Netzen aus Edelmetallen für katalytische Prozesse, insbesondere zur katalytischen Oxidation von Ammoniak, oder zur Rückgewinnung der bei der katalytischen Ammoniakverbrennung sich verflüchtigenden Platinmetalle durch Stricken von Drähten aus Platin- oder Palladiumlegierungen auf Strickmaschinen,
dadurch gekennzeichnet,
daß Drähte aus Platin-Rhodium-Legierungen mit 4 bis 12 Gew. % Rhodium oder Drähte aus Platin-Palladium-Rhodiumlegierungen mit 4 bis 12 Gew.% Palladium und Rhodium oder Drähte aus Palladium-Nickel-Legierungen mit 2 bis 15 Gew.% Nickel oder Drähte aus Palladium-Kupfer-Legierungen mit 2 bis 15 Gew.% Kupfer oder Drähte aus Palladium-Nickel-Kupferlegierunoen mit 2 bis 15 Gew.% Nickel und Kupfer eingesetzt werden, die einen Durchmesser von 50 bis 120 µm aufweisen, eine Zugfestigkeit von 900 bis 1050 N/mm² und eine Dehnungsgrenze von 0,5 bis 3 % besitzen müssen, und daß Flachstrickmaschinen verwendet werden deren Teilung zwischen 3,63 mm und 1,81 mm und deren Maschenlänge zwischen 2 und 6 mm liegt.

## Claims

1. A process for the production of gas-permeable nets of noble metals for catalytic processes, more particularly for the catalytic oxidation of ammonia, or for recovery of the platinum metals which volatilize in the catalytic oxidation of ammonia by knitting of wires of platinum or palladium alloys on knitting machines, characterized in that wires of platinum/rhodium alloys containing 4 to 12% by weight rhodium or or wires of platinum/palladium/rhodium alloys containing 4 to 12% by weight palladium and rhodium or wires of palladium/nickel alloys containing 2 to 15% by weight nickel or wires of palladium/copper alloys containing 2 to 15% by weight copper or wires of palladium/nickel/copper alloys containing 2 to 15% by weight nickel and copper, which must have a diameter of 50 to 120 µm, a tensile strength of 900 to 1050 N/mm² and an elastic limit of 0.5 to 3%, are used and in that flat knitting machines having a gauge of 3.63 mm to 1.81 mm and a sinking depth of 2 to 6 mm are used.

## Revendications

1. Procédé de production de toiles en métaux précieux perméables aux gaz pour des processus catalytiques, notamment pour l'oxydation catalytique de l'ammoniac ou pour la récupération de métaux du groupe du platine volatilisés lors de la combustion catalytique de l'ammoniac par tricotage de fils en alliages de platine ou de palladium sur des machines à tricoter, procédé caractérisé en ce qu'on utilise des fils en alliages platine-rhodium avec 4 à 12 % en poids de rhodium ou des fils en alliages platine-palladium-rhodium avec 4 à 12 % en poids de palladium et de rhodium ou des fils en alliages palladium-nickel avec 2 à 15 % en poids de nickel ou des fils en alliages palladium-cuivre avec 2 à 15 % en poids de cuivre ou des fils en alliages palladium-nickel-cuivre avec 2 à 15 % en poids de nickel et de cuivre, fils qui doivent présenter un diamètre de 50 à 120 µm, une résistance à la traction de 900 à 1050 N/mm² et une limite à l'allongement de 0,5 à 3 % et en ce qu'on utilise des machines à tricoter à plat dont l'intervalle est compris entre 3,63 mm et 1,81 mm et dont la longueur de maille est comprise entre 2 et 6 mm.
